# EUROPÄISCHE PATENTANMELDUNG

(11) **EP 1 995 042 A1**
(43) Veröffentlichungstag der Anmeldung: **26.11.2008**
(21) Anmeldenummer: 08013932.2
(22) Anmeldetag: 19.02.2005
(51) Int. Cl.: B29C 70/02, B29C 70/04, B29C 70/68, B29C 37/00, B29C 44/32, B29C 67/24, B29K 67/00

(54) **Verarbeitung von zyklischen Oligomeren zu thermoplastischen PBT-Kunststoffen**

(30) Priorität: 04.03.2004 EP 04405128
(62) Teilanmeldung aus: 05707530.1
(71) Anmelder: Alcan Technology & Management Ltd., 8212 Neuhausen am Rheinfall (CH)
(72) Erfinder: Henne, Markus, 8708 Männedorf (CH); Rakutt, Dietmar, 6330 Cham (CH); Behre, Kurt, 49075 Osnabrück (DE); Hintermann, Martin, 9410 Helden (CH)

(57) **Zusammenfassung**

Die Erfindung betrifft ein Verfahren zur Herstellung eines Mehrschichtverbundes, enthaltend wenigstens eine Schicht aus einem Schaumstoff und eine mit dieser verbundenen Deckschicht aus einem faserverstärkten Plattenmaterial. Die Erfindung zeichnet sich dadurch aus, dass sowohl der Schaumstoff als auch das Plattenmaterial eine Kunststoffmatrix aus einem Polyester enthalten und zur Herstellung des Mehrschichtverbundes eine mit einem reaktiven Ausgangsmaterial, enthaltend zyklische oder makrozyklische Oligomere des Polyesters vermengt mit einem Polymerisationskatalysator, imprägnierte oder beschichtete ein- oder mehrlagige Faserbahn mit einer Schaumstoffschicht aus einem polymerisierten Polyester zu einem Laminat verbunden wird, und das reaktive Ausgangsmaterial unter Ausbildung der Kunststoffmatrix des Plattenmaterials und unter inniger Verbindung mit der Schaumstoffschicht zu einem Polyester polymerisiert wird.

## Beschreibung

Die Erfindung betrifft Verfahren zur Herstellung von faserverstärkten Kunststoffartikeln, enthaltend PBT oder ein PBT-Blend, nach dem Oberbegriff der unabhängigen Ansprüche. Die Erfindung betrifft ferner faserverstärkte Kunststoffartikel, enthaltend PBT oder eine PBT-Legierung, nach dem Oberbegriff der unabhängigen Ansprüche.

Bis anhin gestaltete es sich schwierig thermoplastische Kunststoffsysteme zwecks Herstellung von faserverstärkten Kunststoffartikeln in den für die Verarbeitung von Duroplastsystemen, wie RTM-Verfahren oder Prepreg-Verarbeitung, ausgelegten Herstellungsprozessen zu verarbeiten. Die Schwierigkeit der Verarbeitung von thermoplastischen Kunststoffsystemen liegt unter anderem in der Bereitstellung eines geeigneten reaktiven Ausgangsmaterials, welches nicht nur chemisch stabil ist, sondern sich auch zur weiteren Verarbeitung in einen niedrig-viskosen Zustand überführen lässt.

So werden seit einiger Zeit Anstrengungen unternommen, thermoplastische Kunststoffsysteme zu entwickeln, welche sich ähnlich wie duroplastische Kunststoffsysteme verarbeiten lassen. Ein bekanntes derartiges System basiert bsp. auf einem Polyamid (PA), wie PA-12 mit Laktam als Ausgangsmaterial. Ein weiteres vielversprechendes System basiert auf einem Polyester, wie Polybutylenterephthalat (PBT). Das reaktive Ausgangsmaterial zur Herstellung des Polyesters bzw. PBT liegt in Form sogenannter zyklischer bzw. makrozyklischer Oligomere vor, welche mit einem entsprechenden Polymerisatons-Katalysator vermischt sind. Das besondere an diesem System liegt darin, dass sich das reaktive Ausgangsmaterial in eine niedrig-viskose Schmelze überführen lässt, was dieses für die Verarbeitung mittels eines Injektionsverfahrens, wie z.B. eines LCM-Verfahrens, geeignet macht.

LCM heisst "Liquid Composite Moulding". Unter LCM-Verfahren oder LCM-Technologie wird in diesem Text ein Verfahren verstanden, in welchem der Hohlraum eines mehrteiligen Formwerkzeuges, insbesondere eines zweiteiligen Formwerkzeuges, mit einem ein- oder mehrteiligen Faserrohling oder Fasergebilde beschickt wird und in den Hohlraum des geschlossenen Formwerkzeuges eine duro- oder thermoplastische Kunststoffmatrix eingespeist bzw. injiziert wird, welche den Faserrohling unter Ausbildung eines Faserverbundbauteils durchfliesst und imprägniert und den Hohlraum des Formwerkzeugs füllt, und nach Abschluss der Formfüllung das Faserverbundbauteil zur Aushärtung bzw. Polymerisation gebracht und anschliessend entformt wird. Das besagte LCM-Verfahren umfasst selbstverständlich auch Varianten mit Schmelzkernen oder permanenten Kernen, wie z.B. Schaumstoffkernen, welche zusammen mit den Fasergebilden in das geöffnete Formwerkzeug eingelegt werden.

Wird in einem LCM-Verfahren ein duroplastisches Kunststoffmatrixsystem verarbeitet, so handelt es sich um ein Resin-Transfer-Molding-(RTM)-Verfahren. Das LCM-Verfahren versteht sich somit als eine dem RTM-Verfahren übergeordnete Bezeichnung für das voran beschriebene Injektions-Verfahren, welches neben duroplastischen Kunststoffmatrixsystemen auch thermoplastische Kunststoffmatrixsysteme umfasst. Das RTM-Verfahren ist beispielsweise in Kötte, "Der Resin-Transfer-Molding-Prozess - Analyse eines Harzinjektionsverfahrens", Verlag TÜV Rheinland, 1991 ausführlich beschrieben.

Häufig wird jedoch auch bei der Verarbeitung von thermoplastischen Matrixsystemen mittels LCM-Technologie von einem RTM-Verfahren gesprochen.

Die niedrig-viskosen Eigenschaften der genannten zyklischen Oligomere sind jedoch auch für die Verarbeitung in anderen Verfahren vorteilhaft, da das niedrig-viskose, reaktive Ausgangsmaterial eine optimale Durchtränkung bzw. Imprägnierung der Fasern bewirkt, was insbesondere bei Kunststoffartikeln mit einem hohen Fasergehalt in Form von dichten Fasergebilden von grosser Bedeutung ist.

Die US 6,369,157 beschreibt beispielsweise ein geeignetes reaktives Ausgangsmaterial, welches sich zu einem PBT-Kunststoff oder einer PBT-Kunststofflegierung verarbeiten lassen. Als Verarbeitungsverfahren werden z.B. Prepreg-Prozesse, RTM-Verfahren, Pultrusions-Verfahren, Extrusionsverfahren sowie Formpress-Verfahren genannt.

Aufgabe vorliegender Erfindung ist es, konkrete Verfahren zur Verarbeitung von PBT-Kunststoffsystemen bzw. des dazugehörigen reaktiven PBT-Ausgangsmaterials auf Basis von zyklischen Oligomeren vorzuschlagen. Ein weiterer Gegenstand vorliegender Erfindung sind auch die daraus resultierenden, PBT-Kunststoffe enthaltenden Produkte.

Erfindungsgemäss wird die Aufgabe durch den kennzeichnenden Teil der unabhängigen Ansprüche gelöst. Weiterbildende Ausführungen werden durch die abhängigen Ansprüche beschrieben, welche hiermit Teil der Beschreibung sind.

### Definitionen

### Reaktives Ausgangsmaterial:

Ein reaktives Ausgangsmaterial gemäss nachfolgender Definition umfasst unter anderem zyklische bzw. makrozyklische Oligomere des Polyesters, insbesondere des PBT (CPBT genannt), welche mit einem Polymerisations-Katalysator vermengt sind. Ferner umfasst ein reaktives Ausgangsmaterial auch Blends (Legierungen), enthaltend die vorgenannten Stoffe, welche bsp. nach Abschluss der Polymerisation ein PBT-Blend (PBT-Kunststofflegierung) ergeben. Die genannten reaktiven Ausgangsmaterialien zur Herstellung von Polyestern bzw. PBT-Kunststoffen sind in der US 6,369,157 näher beschrieben, deren Inhalt hiermit Teil der Offenbarung ist. Besonders geeignete reaktive PBT-Ausgangsmaterialien in Form zyklischer Oligomere werden unter dem Namen CBT™ (Cyclic Butylene Terephthalate) von der Firma Cyclics hergestellt. Der Polymerisations-Katalysator kann bsp. ein Zink-Katalysator oder ein anderer geeigneter Katalysator sein.

### Polyester:

Polyester gemäss nachfolgender Definition beinhalten unter anderem Kunststoffe wie PET (Polyethylenterephthalat) sowie dazugehörige Blends und insbesondere PBT (Polybutylenterephthalat) oder PBT-Blends (PBT-Kunststofflegierungen).

### Fasergebilde:

Fasergebilde gemäss nachfolgender Definition sind flächenförmige Gebilde und umfassen unter anderem textile Flächengebilde, z.B. Vliese, "Non-wovens", nicht-maschenbildende Systeme, wie Gewebe, uni- oder bidirektionale Gelege, Geflechte oder Matten usw. oder z.B. maschenbildende Systeme, wie Gestricke oder Gewirke sowie gestickte Strukturen.

### Fasern:

Die Fasern der Fasergebilde sind gemäss nachfolgender Definition bsp. Langfasern mit Faserlängen von z.B. 3-150 mm oder Endlosfasern und sind bsp. in Form von Rovings zu Fasergebilden verarbeitet.

Die Fasern können Glasfasern, Aramidfasern, Kohlenstofffasern, Kunststofffasern, Naturfasern oder Gemische davon sein. Kunststofffasern können insbesondere Polyesterfasern, wie z.B. PET, PBT oder PBT-Blend, sein. Hinsichtlich anorganischer Fasern werden bevorzugt Glasfasern verwendet, da sich diese im Gegensatz zu Aramid- oder Kohlenstofffasern beim Wiederverwerten der faserverstärkten Kunststoffartikel mit relativ wenig Aufwand von der Kunststoffmatrix trennen lassen und Glasfasern ferner verhältnismässig kostengünstig sind.

PBT-Fasern zeichnen sich dadurch aus, dass diese bedingt durch den Herstellungsprozess eine kristalline Ausrichtung in Faserrichtung aufweisen, während die Matrix zwischen den Fasern weitgehend keine kristalline Ausrichtung aufweist, d.h. amorph ist.

### Platte:

Platte gemäss nachfolgender Definition bedeutet einen flächigen Körper mit einer gewissen Biegesteifigkeit und einer Dicke, welche im Vergleich zur Längen- und Breitenausdehnung klein ist. Die genannten Platten weisen bsp. eine Dicke von 0.5 mm oder grösser, vorzugsweise von 1 mm oder grösser, und insbesondere von 2 mm oder grösser und von 10 mm oder kleiner, vorzugsweise 6 mm oder kleiner, und insbesondere von 4 mm oder kleiner, auf.

### Deckschicht-Verfahren

Zur Herstellung preimprägnierter Fasergebilde (Prepreg), in der Regel Fasermatten, wurden bis anhin die Fasergebilde mit einer reaktiven Kunststoffmatrix durchtränkt (imprägniert) oder mit reaktivem Pulver beschichtet, wobei das Pulver, insbesondere das erwärmte Pulver, selbst klebrige Eigenschaften hat und dadurch auf dem Fasergebilde haften bleibt.

Es ist auch bekannt, das reaktive Ausgangsmaterial, d.h. die zyklischen Oligomere, in Filmform auf die Fasergebilde aufzubringen, wobei durch Aufschmelzen dieser Filme eine Imprägnierung des Fasergebildes dank der niedrig-viskosen Eigenschaften des reaktiven Ausgangsmaterials im schmelzflüssigen Zustand stattfindet.

Da Prepregs in der Regel klebrig sind werden diese nach bekannter Technik ein- oder beidseitig mit einer Release-Layer, also einem Trennfilm, versehen. Eine solche Release-Layer erlaubt das Aufwickeln kontinuierlich produzierter Prepregs zu Rollenware auf sogenannte Coils zur Zwischenlagerung vor der weiteren Verarbeitung zu faserverstärkten Plattenmaterialien, ohne dass diese dabei miteinander verkleben. Andererseits sind die Release-Layer auch im weiteren Verarbeitungsprozess von Bedeutung, da diese bei der Herstellung von gehärtetem, bzw. polymerisiertem Plattenmaterial die Anlagen, d.h. die Pressen oder Walzen vor dem Verkleben mit den Prepregs schützen. Nach Aushärtung bzw. Polymerisation der Prepregs zu einem Plattenmaterial, auch Organic Sheet genannt, wird die Release-Layer entfernt. Die Release-Layer ist hier also nicht Teil des Endproduktes sondern lediglich ein Produktionshilfsmittel.

Die Idee vorliegender Erfindung liegt in der Verbesserung des Verfahrens zur Herstellung und weiteren Verarbeitung von sogenannten Prepreg-Halbfabrikaten und im weiteren Sinn zur Herstellung von Plattenmaterial aus Polyester, wie PET und insbesondere PBT oder PBT-Blend unter Verwendung eines reaktiven Ausgangsmaterials.

Dazu werden in einem ersten Schritt Fasergebilde mit dem reaktiven Ausgangsmaterial imprägniert oder beschichtet. Die Fasergebilde können dazu mit einem flüssigen, reaktiven Ausgangsmaterial getränkt werden, bsp. mittels Eintauchen der Fasergebilde in ein Lösungsbad, wobei das Lösungsmittel nach der Imprägnierung wieder entzogen wird. Ferner kann das flüssige Ausgangsmaterial auch mittels Sprühen, Streichen, Giessen, Walzen oder Rakeln auf die Fasergebilde aufgebracht werden.

Die Fasergebilde können in einer alternativen Variante mit dem reaktiven Ausgangsmaterial in Pulverform oder in Form von Folien beschichtet werden, wobei in beiden Fällen das reaktive Ausgangsmaterial im Laufe des Herstellungsverfahrens unter Imprägnierung der Fasergebilde aufgeschmolzen wird. Wird das reaktive Ausgangsmaterial in Pulverform auf das Fasergebilde aufgebracht, so kann dieses zwecks Verbesserung der Hafteigenschaften erwärmt werden, wobei das Pulver sogar erweichen oder anschmelzen kann. Alternativ oder in Kombination dazu kann das Fasergebilde vorgewärmt und mit dem Pulver beschichtet werden. Die Pulverbeschichtung kann auf ein horizontal oder vertikal durchlaufende Faserbahn erfolgen, wobei das Pulver entsprechend vertikal oder horizontal der Faserbahn zugeführt wird. Das Pulver kann hierbei mittels Schwerkraft und/oder mittels Gas- bzw. Luftstrom zugeführt werden. Der Gas- bzw. Luftstrom ist bevorzugt erwärmt, so dass das Pulver beim Auftreffen auf die Faserbahn adhäsive Eigenschaften entfaltet. Ferner kann das Pulver auch mittels eines elektrostatischen Verfahrens zugeführt werden.

Im besagten Verfahren können auch zwei oder mehrere Lagen von Fasergebilden wie oben beschrieben imprägniert bzw. beschichtet und zu einer mehrlagigen bzw. mehrschichtigen Faserbahn zusammengeführt werden.

In einem nachfolgenden Schritt wird die mit dem reaktiven Ausgangsmaterial imprägnierte bzw. beschichtete ein- oder mehrlagige Faserbahn ein- oder beidseitig mit einer Deckschicht in Form eines Kunststoff-Films bzw. -Folie beschichtet. Der Kunststoff-Film bzw. -Folie wird hierbei integraler Bestandteil des herzustellenden, faserverstärkten Plattenmaterials.

Der Kunststoff-Film bzw. -Folie kann aus einem thermoplastischen oder duroplastischen Kunststoff sein. Vorzugsweise ist die Deckschicht ein polymerisierter thermoplastischer Film aus einem Polyester, wie PET und insbesondere aus einem PBT oder PBT-Blend.

Der Kunststofffilm weist bsp. eine Dicke von grösser Dicke 50 µm, insbesondere von grösser 100 µm und von kleiner 2000 µm, insbesondere von kleiner 1000 µm auf. Durch die klebrigen Eigenschaften des reaktiven Ausgangsmaterials bleibt der Kunsttoff-Film auf dem imprägnierten bzw. beschichteten Fasergebilde haften. Der Kunststofffilm kann als feste, von einer Rolle abgewickelte Folie oder mittels Extrusions als schmelzflüssiger, teilfester oder fester Film aufgetragen werden.

Die auf die Faserbahn aufgebrachte Deckschicht kann auch ein faserverstärktes, bahnförmiges Kunststoffmaterial mit einer äusseren, faserfreien (polymerisierten) Kunststoffschicht der oben genannten Zusammensetzung sein.

Die Fasern der Faserbahn sind bevorzugt aus Glas oder Polyester, wie PET und insbesondere PBT bzw. PBT-Blend. Durch die Verwendung von Polyesterfasern, wie PBT-Fasern wird ein sortenreines Plattenmaterial erreicht.

Die Prepregs mit applizierten Deckschichten werden zur Weiterverarbeitung unter Druck und Wärmeeinwirkung zu einem Polyester, wie PET und insbesondere PBT oder einem PBT-Blend polymerisiert, wobei die Deckschichten mit der polymerisierenden Kunststoffmatrix des Fasergebildes einen innigen Verbund eingehen und die Deckschichten integraler Bestandteil des plattenförmigen Faserverbundes werden.

Der Schmelz- oder Zersetzungspunkt der Deckschichten liegt hierbei höher als die Polymerisationstemperatur des reaktiven Ausgangsmaterials. Somit wird die Deckschicht während des Polymerisationsvorgangs der Kunststoffmatrix nicht beeinträchtigt.

Da der Schmelzpunkt von PBT (ca. 220°C) höher ist als die Polymerisationstemperatur der eingesetzten reaktiven Ausgangsmaterialien (ca. 180-190°C) werden die Deckschichten aus PBT-Filmen durch die Wärmeeinwirkung beim Polymerisieren der Kunststoffmatrix nicht nachteilig beeinträchtigt. Deckschichten aus einem Polyester, insbesondere aus PBT, ergeben überdies einen nach Recycling-Kriterien sortenreinen Kunststoff im Verbundmaterial.

Die integrale Applikation von Deckschichten hat den zusätzlichen Vorteil, dass eine hohe Oberflächengüte des Plattenmaterials erreicht wird, da die Deckschichten keine Fasern enthalten.

Die Deckschichten und die Kunststoffmatrix der Faserbahn bestehen in polymerisiertem Zustand bevorzugt aus demselben Kunststoff bzw. aus einander nahestehenden Kunststoffen oder Kunststofflegierungen.

In Weiterbildung der Erfindung können die Deckschichten eingefärbt sein und so dem Plattenmaterial bereits das äussere, farbliche Erscheinungsbild geben. Die Einfärbung kann derart sein, dass die unter den Deckschichten angeordnete faserverstärkte Schicht nicht mehr sichtbar ist. Dadurch kann gegebenenfalls ein nachfolgender Farblackierungsschritt eingespart werden.

Die Produktion des erfindungsgemässen Plattenmaterials erfolgt von der Zufuhr der Fasergebilde und des Ausgangsmaterials bis zum Austritt des fertigen Plattenmaterials aus der Presse bevorzugt kontinuierlich und inline, d.h. in einer Fertigungslinie.

Hierzu werden ein oder mehrere Fasergebilde der Verarbeitungseinrichtung kontinuierlich zu- und gegebenenfalls zusammengeführt, wobei diese bsp. bahnförmig von einer Rolle abgewickelt und inline mit dem reaktiven Ausgangsmaterial imprägniert bzw. beschichtet werden. Die Imprägnierung bzw. Beschichtung kann kontinuierlich bsp. mittels eines Tauchbades in einer Durchlaufanlage, einer Sprühvorrichtung, einer Pulverstreuvorrichtung, einer Vorrichtung zur elektrostatischen Übertragung des Pulvers auf die Fasergebilde oder einer Vorrichtung zur Zufuhr eines flüssigen, teilfesten oder festen Filmes aus einem reaktiven Ausgangsmaterial, z.B. mittels Extrusion oder ab Rolle, erfolgen.

Danach wird ein- oder beidseitig inline ein (polymerisierter) Kunststofffilm bzw. -Folie auf die mit dem reaktiven Ausgangsmaterial imprägnierte bzw. beschichtete Faserbahn aufgebracht, wobei der Kunststofffilm entweder von Rollen (Coils) abgehaspelt wird oder direkt inline extrudiert und in flüssigem, teilfestem oder festem Zustand auf die imprägnierte bzw. beschichtete Faserbahn aufgebracht wird.

In einer nachfolgenden Durchlaufpresse wird der Verbund unter Druck- und/oder Wärmeeinwirkung zu einem faserverstärkten Plattenmaterial polymerisiert. Der Pressvorgang kann mittels nachgeordneten Presswalzen und/oder mittels Pressplatten erfolgen. Die Press-Vorrichtung kann bsp. schwimmende, hydraulisch betätigte untere Pressenplatten, welche gegen eine obere starre Pressenkonstruktion arbeiten, umfassen. Eine solche Durchlaufpresse wird bsp. mit Bändern, wie PTFE-Bändern oder Stahlbändern betrieben und erlaubt in Abhängigkeit von der Länge der Heizstrecke mittlere bis hohe Durchsätze.

Das bahnartige, polymerisierte Plattenmaterial kann anschliessend längs und/oder quer zur Durchlaufrichtung zu einzelnen Platten oder Streifen geschnitten und batch-weise gestapelt werden. Dank den Deckschichten werden die Anlagen bei der Weiterverarbeitung der Prepregs zu Plattenmaterial geschont.

In einer spezifischen Ausführung der Erfindung werden die Prepregs nach dem Beschichten mit den Deckschichten nicht durch eine Presse geführt sondern auf Rollen aufgewickelt oder zugeschnitten und batch-weise gestapelt, wobei die einzelnen Platten dank der Release-Funktion der Deckschichten nicht aneinander haften. Die so der Zwischenlagerung zugeführten Prepregs können zu einem späteren Zeitpunkt wie oben beschrieben zu Plattenmaterial weiterverarbeitet werden oder andersweitig verarbeitet werden, bsp. in Formpressen.

Das erfindungsgemässe faserverstärkte Plattenmaterial findet Verwendung als flache Platten bzw. Streifenware. Ferner kann das Plattenmaterial zu thermisch umgeformten Artikeln, bsp. mittels Tiefziehen, weiterverarbeitet werden. Weiters kann das besagte Plattenmaterial in Form flacher Platten zu mehrschichtigen Verbunden, insbesondere zu Sandwichverbunden, weiterverarbeitet werden, wobei die weiteren Schichten bsp. Schaumstoffe, Metallfolien oder Metallplatten umfassen können.

Die Herstellung solcher Mehrschichtverbunde kann ebenfalls kontinuierlich und inline erfolgen, wobei die weiteren Schichten, wie Schaumstoffschichten, ebenfalls kontinuierlich zugeführt werden. In bevorzugter Ausführung findet die Herstellung der Mehrschichtverbunde inline und direkt im Anschluss an die Produktion des faserstärkten Plattenmaterials statt. Wird das besagte Plattenmaterial zu Mehrschichtverbunden weiterverarbeitet, so genügt es unter Umständen, dass das Prepreg-Material lediglich mit einer Deckschicht mit einem permanenten Kunststofffilm als Release-Layer beschichtet wird, während die zweite Oberfläche mit einer temporären Release-Layer beschichtet wird, die zur Herstellung des Mehrschichtverbundes wieder entfernt wird. Die den permanenten Kunststofffilm enthaltende Deckschicht bildet dabei eine Deckschicht des Mehrschichtverbundes während die zweite Oberfläche die Kontaktfläche zu weiteren Verbundschichten ist.

Das besagte Plattenmaterial oder die daraus hergestellten Verbundplatten oder thermogeformten Artikel finden Verwendung im Transportwesen, wie Strassenfahrzeugbau (Automobile, Busse, Lastkraftwagen, Leichtfahrzeugen etc.), Schienenfahrzeugbau (Eisenbahn, Tram, Schnellbahn, Magnetschwebebahnen), Luftfahrt (Flugzeugbau, Raumfahrt), im Marine-, Boots- und Schiffsbau sowie in Seilbahnkabinen. Ferner findet das besagte Plattenmaterial Verwendung im Hochbau und Tiefbau, Innenausbau und insbesondere in der Gebäudetechnik sowie in der Herstellung von Sportgeräten.

### Sortenreine Kunststoffartikel

Gegenstand vorliegender Erfindung sind auch sortenreine, faserverstärkte Kunststoffartikel, nachfolgend sortenrein-Kunststoffartikel genannt, welche Fasern aus Polyester, wie PET und insbesondere PBT oder einem PBT-Blend, und eine Kunststoffmatrix ebenfalls aus Polyester, wie PET und insbesondere PBT oder PBT-Blend, enthalten. Die sortenrein-Kunststoffartikel können beispielsweise faserverstärkte Kunststoffplatten sein, welche aus mit einem reaktiven Ausgangsmaterial imprägnierten bzw. beschichteten Prepregs, welche unter Druck und/oder Wärmeeinwirkung zu faserverstärkten Kunststoffplatten polymerisiert werden, hergestellt sind. Die Fasergebilde können beispielsweise mit dem reaktiven, pulverförmigen Ausgangsmaterial beschichtet sein oder aber mit dem in Flüssigform, gegebenenfalls in Lösung vorliegenden, reaktiven Ausgangsmaterial getränkt sein. Es ist auch denkbar, dass die Fasergebilde ein- oder beidseitig mit einem Film aus einem reaktiven Ausgangsmaterial beschichtet sind, wobei der Film zwecks Imprägnierung der Fasern niedrig-viskos aufgeschmolzen wird.

Unter Druck- und Wärmeeinwirkung wir die Kunststoffmatrix in einer Presseinrichtung unter Ausbildung einer faserverstärkten Kunststoffplatte polymerisiert.

Die mit dem reaktiven Ausgangsmaterial beschickten Fasergebilde können auch in einem Formwerkzeug unter Druck- und Wärmeanwendung und Polymerisation der Kunststoffmatrix zu einem geformten sortenrein-Kunststoffartikel verarbeitet werden.

Das besagte Plattenmaterial kann gemäss dem vorgängig beschriebenen DeckfolienVerfahren hergestellt sein und im weiteren eine ein- oder beidseitige Beschichtung mit einem Deckfilm aus Polyester, wie PET und insbesondere aus einem PBT oder PBT-Blend, enthalten.

Ferner können die besagten sortenreinen, faserverstärkten Einkomponenten-KunststoffArtikel auch mittels einem vorgängig beschriebenen LCM-Verfahren hergestellte Formkörper sein. Das reaktive Ausgangsmaterial wird hierzu zweckmässig in ein mit einem Fasergebilde ausgelegten Formwerkzeug eingespeist bzw. injiziert. Die Fasern der Fasergebilde bestehen aus einem Polyester, wie PET und insbesondere PBT oder PBT-Blend.

### Einkomponenten-Kunststoffartikel

Eine weitere Verarbeitungsmethode zeichnet sich dadurch aus, dass der faserverstärkte Kunststoffartikel vollständig aus einem Polyester, wie PET und insbesondere aus einem PBT oder PBT-Blend besteht. Zur Herstellung genannter Kunststoffartikel wird das reaktive Ausgangsmaterial zu linearen Fasern verarbeitet, welche wiederum zu einem Polyester, wie PET und insbesondere PBT oder einem PBT-Blend polymerisiert werden. Alternativ dazu können die Fasern auch direkt aus einem Polyester, wie PET und insbesondere PBT oder PBT-Blend hergestellt werden. Die Fasern zeichnen sich dadurch aus, dass sie eine in Faserrichtung ausgerichtete Kristallinität aufweisen und daher gute mechanische Eigenschaften, wie Steifigkeit und Zugfestigkeit, aufweisen. Die genannten Fasern werden in einem nachfolgenden Verarbeitungsschritt zu Fasergebilden, wie vorgängig definiert, verarbeitet.

In einem nachfolgenden Verfahrensschritt werden wenigstens die Oberflächen der einzelnen Fasern oder Rovings auf- bzw. angeschmolzen, wobei der schmelzflüssige Kunststoff die Fasern verbindet bzw. verklebt und unter Rekristallisation zu einer zwischen den Fasern angeordneten, vorzugsweise isotropen Kunststoffmatrix verfestigt wird. Dieser Verfahrensschritt zeichnet sich durch Anwendung von Druck und/oder Hitze aus. Ein solches Verfahren kann bsp. ein Heiss-Press- bzw. Heiss-Kompaktierungsverfahren (hot compaction) sein.

Das Ergebnis ist ein kompakter, selbstverstärkter Kunststoffartikel, welcher in eine Kunststoffmatrix eingebettete sortengleiche Kunststofffasern enthält. Der besagte Kunststoffartikel weist dabei ähnliche mechanische Eigenschaften wie mit anorganischen Fasergebilden verstärkte Kunststoffartikel auf. Sortengleich oder sortenrein bedeutet hier, dass beide Komponenten aus einem Polyester sind.

Der beschriebene polymerisierte Kunststoffartikel zeichnet sich durch seine gute Thermoformbarkeit aus, und lässt sich in nachgeschalteten Umformverfahren unter Einsatz von Wärme und/oder Druck weiter umformen bzw. endformen.

Die besagten Kunststoffartikel, nachfolgend Einkomponenten-Kunststoffartikel genannt, können in Form von Platten oder geformten Körpern hergestellten werden, wobei die Platten vorzugsweise in einer entsprechenden Presseinrichtung oder Walzvorrichtung kontinuierlich hergestellt werden, während die geformten Körper vorzugsweise in entsprechend gestalteten Formwerkzeugen, wie Formpressen, stückweise gefertigt werden.

### Mehrschichtverbund

Gegenstand vorliegender Erfindung ist auch ein Mehrschichtverbund, enthaltend wenigstens eine Schicht aus einem offen- und/oder geschlossenzelligen Schaumstoff. Der Schaumstoff besteht aus einem Polyester, wie PET und insbesondere PBT oder PBT-Blend. In bevorzugter Ausführung enthält wenigstens eine weitere Schicht des Mehrschichtsverbundes eine Kunststoffmatrix aus einem Polyester, wie PET und insbesondere PBT oder PBT-Blend. Die weitere Schicht ist vorzugsweise eine faserverstärkte Kunststoffplatte.

Der genannte Mehrschichtverbund mit Schaumstoffschicht kann bsp. Schichten, insbesondere ein- oder beidseitige Deckschichten, aus einem Sortenrein-Kunststoffartikel oder einem Einkomponenten-Kunststoffartikel in Plattenform, wie oben beschrieben, enthalten. Ferner können die besagten Schichten auch aus einem gemäss oben beschriebenen Deckfolienverfahren hergestellten Plattenmaterial bestehen.

Der Mehrschichtverbund kann bsp. ein Sandwichelement mit einem Schaumstoffkern aus einem Polyester, wie PET und insbesondere PBT oder PBT-Blend, sowie beidseitigen Deckschichten aus faserverstärkten Kunststoffplatten mit einer Kunststoffmatrix aus Polyester, wie PET und insbesondere PBT oder einem PBT-Blend sein.

Gemäss einer spezifischen Ausführungsform zur Herstellung genannter Mehrschichtverbunde wird ein mit einem reaktiven Ausgangsmaterial imprägniertes bzw. beschichtetes Fasergebilde, ein sogenanntes Prepreg, in einem kontinuierlichen oder diskontinuierlichen Verfahren (z.B. ein Batch-Prozess) auf eine (polymerisierte) Schaumstoffschicht appliziert, wobei das Prepreg unter Anwendung von Wärme und/oder Druck zu einer Verstärkungsschicht polymerisiert wird, welche eine dauerhafte Verbindung mit der Schaumstoffschicht eingeht, wobei die Schaumstoffschicht ein Kernmaterial ist.

Durch die klebrigen Eigenschaften des reaktiven Ausgangsmaterials lässt sich die Verstärkungsschicht ausgezeichnet auf die Schaumstoffschicht applizieren. Die Polymerisation des Matrixmaterials führt zu einer dauerhaften, starken Verbindung zwischen der Verstärkungsschicht und der Schaumstoffschicht.

Mehrschichtverbunde, insbesondere 3-schichtige Sandwichverbunde können bsp. Gesamtschichtdicken von grösser 3 mm, vorzugsweise grösser 5 mm, insbesondere grösser 8 mm und kleiner 30 cm, vorzugsweise kleiner 20 cm, insbesondere kleiner 10 cm, aufweisen.

### Schaumstoff-Extrusion

Ein weiterer Gegenstand der Erfindung ist die kontinuierliche Herstellung von Mehrschichtverbunden, insbesondere von Sandwichverbunden. In einem, vorzugsweise kontinuierlichen Verfahren, werden faserverstärkte Kunststoffplatten mit einer Kunststoffmatrix aus einem (polymerisierten) Polyester, wie PET und insbesondere PBT oder PBT-Blend hergestellt. Ein mit einem Treibmittel versehenes schäumbares Ausgangsmaterial aus einem (Polymerisierten) Polyester, wie PET und insbesondere PBT oder PBT-Blend, wird mittels eines Extruders durch eine oder mehrere Düsen extrudiert. Das Ausgangsmaterial expandiert bei Austritt aus der Extruderöffnung unter Druckentlastung zu einem flächigen, geschäumten Kunststoff.

In bevorzugter Ausführung des Extrusionsschrittes wird das Ausgangsmaterial in Form spaghetti-förmiger Stränge durch eine Lochscheibe extrudiert, wobei die Stränge bei Austritt aus der Extruderöffnung expandieren und gegenseitig zu einem flächigen, geschäumten Kunststoff verkleben bzw. verschmelzen. Das Ausgangsmaterial kann auch durch eine einzige Schlitzdüse extrudiert werden.

Das schäumbare Ausgangsmaterial kann direkt auf das ebenfalls kontinuierlich zugeführte, faserverstärkte Plattenmaterial extrudiert werden, so dass das extrudierte Ausgangsmaterial mit dem Plattenmaterial verklebt und so mit diesem eine innige Verbindung eingeht.

In einer weiteren Ausführung der Erfindung wird das schäumbare (polymerisierte) Ausgangsmaterial auf das noch nicht oder erst teilweise polymerisierte Plattenmaterial aufextrudiert, wobei das reaktive Ausgangsmaterial durch seine Klebeigenschaften eine innige Verbindung mit dem aufextrudierten Ausgangsmaterial eingeht. In einem nachfolgenden Verfahrensschritt wird das Plattenmaterial unter Wärme und/oder Druckeinwirkung vollständig polymerisiert.

Das Plattenmaterial kann beispielsweise nach dem oben beschriebenen Deckfolienverfahren hergestellt werden, wobei das Plattenmaterial zweckmässig nur einseitig, d.h. auf seiner freien, nicht weiter beschichteten Oberfläche mit einer Deckschicht der oben genannten Art beschichtet ist. Die Deckschicht ist insbesondere ein Kunststofffilm bzw. - folie aus einem Polyester, wie PET und insbesondere PBT, PBT-Blend.

Das Plattenmaterial kann auch in Form des oben beschriebenen Sortenrein-Kunststoffartikels oder Einkomponenten-Kunststoffartikels vorliegen. Gemäss letzterer Ausführung liegt ein sortenreiner Sandwich-Verbund vor.

### Hybrid-Fasergebilde

In einer weiteren Anwendung von PBT-Kunststoffen bzw. dessen reaktivem PBT-Ausgangsmaterial wird ein Hybridfasergebilde enthaltend Verstärkungsfasern, wie anorganische Fasern, z.B. Glasfasern, Kohlenstofffasern oder Aramidfasern, sowie Matrixfasern in Form von Kunststofffasern aus entweder (a) einem Polyester, wie PET und insbesondere PBT oder PBT-Blend oder (b) aus einem reaktiven Ausgangsmaterial, wie CBT™, hergestellt. Die Verstärkungs- und Matrixfasern sind vorzugsweise in möglichst gleichmässiger Verteilung miteinander verarbeitet.

Durch Hitze und/oder Druckanwendung werden die Matrixfasern in einem nachfolgenden Arbeitsschritt aufgeschmolzen und zu einer die Verstärkungsfasern umgebenden bzw. das Fasergebilde aus Verstärkungsfasern durchdringenden Kunststoffmatrix umgebildet, während die Verstärkungsfasern unbeschadet erhalten bleiben. Matrix- und Verstärkungsfasern können z.B. miteinander zu Fasergebilden verwoben oder verflochten sein.

Die aus Hybrid-Fasergebilden hergestellten Kunststoffartikel können faserverstärkte Kunststoffplatten sein, welche in einer Presse, insbesondere Durchlaufpresse, hergestellt werden. Ferner können besagte Kunststoffartikel Formkörper sein, welche in einem Formwerkzeug, insbesondere einem Presswerkzeug, unter Wärme- und/oder Druckeinwirkung geformt werden.

Gemäss Variante (a) wird das besagte Polyester lediglich zu einer Kunststoffmatrix aufgeschmolzen und wieder verfestigt. Gemäss Variante (b) wird das reaktive Ausgangsmaterial aufgeschmolzen, polymerisiert und zu einer Kunststoffmatrix verfestigt.

Durch die niedrig-viskosen Eigenschaften des reaktiven Ausgangsmaterials in schmelzflüssigem Zustand gemäss Variante (b) wird eine gute Imprägnierung der Verstärkungsfasern erreicht.

In einer spezifischen Weiterentwicklung des Hybrid-Fasergebildes können die Verstärkungsfasern aus einem PBT oder PBT-Blend sein und die Matrix-Fasern des Hybrid-Fasergebildes aus dem genannten reaktiven PBT-Ausgangsmaterial. Da das (polymerisierte) PBT bzw. PBT-Blend einen höheren Schmelzpunkt aufweist als das entsprechende reaktive PBT-Ausgangsmaterial, werden die Verstärkungsfasern, beim Überführen der Matrix-Fasern in eine Kunststoffmatrix unter Polymerisation nicht aufgeschmolzen.

### Herstellung von faserverstärkten Formteilen mittels Formwerkzeug

Ein weiteres Verfahren zur Verarbeitung von PBT-Matrixsystemen betrifft die Herstellung von faserverstärkten Formkörpern mittels Formwerkzeugen, nachfolgend Formpressverfahren genannt. Das Formwerkzeug beinhaltet wenigstens zwei Werkzeugteile, welche unter Ausbildung einer die Aussenkontur des Formkörpers wiedergebenden Kavität zu einem geschlossenen Formwerkzeug zusammenführbar sind.

In einer ersten Ausführung des genannten Verfahrens wird die Kavität des geöffneten Formwerkzeugs mit Fasergebilden sowie mit einem die Kunststoffmatrix bildenden, reaktiven Ausgangsmaterial in Pulverform beschickt, wobei die eingebrachte Pulvermenge auf die Grösse des herzustellenden Formteils abgestimmt ist, so dass im nachfolgenden Formgebungsprozess möglichst kein oder überhaupt kein Überschuss an Matrixmaterial entsteht. Das Formwerkzeug wird geschlossen, wobei unter Anwendung von Wärme und/oder Druck das pulverförmige, reaktive Ausgangsmaterial aufgeschmolzen wird und in die Fasergebilde eindringt und diese imprägniert. Gleichzeitig wird die Polymerisation der Kunststoffmatrix in Gang gesetzt und der Konsolidierungsprozess eingeleitet. Das Formteil wird praktisch vollständig polymerisiert und verfestigt. Es entsteht ein faserverstärktes Formteil aus einem PBT, welches bei Erreichen seiner Formstabilität entformt und gegebenenfalls noch getempert werden kann. Anstelle von PBT können auch weitere Polyester, wie PET oder ein PBT-Blend bzw. deren Ausgangsmaterialien verarbeitet werden.

In spezifischer Ausführung des besagten Verfahrens wird das Formwerkzeug zwecks Einleiten des Formgebungsprozesses mehrstufig, insbesondere zweistufig geschlossen. Dadurch kann der Schliessdruck stufenweise abgebaut werden, so dass fortlaufend aufgeschmolzenes Pulvermaterial kontinuierlich in die Fasergebilde eindringen kann, ohne dass die Fasergebilde beim Schliessen des Formwerkzeugs unter Maximaldruck aus ihrer vorgesehenen Position verschoben oder deformiert werden. Ferner erlaubt das mehrstufige Schliessen des Formwerkzeugs das Abführen von gegebenenfalls überschüssigem Matrixmaterial aus der Kavität.

In einer weiteren Ausführung des besagten Verfahrens kann das reaktive PBT-Ausgangsmaterial auch in Flüssigform in die Kavität des geöffnete Formwerkzeug gegeben werden.

Das vorliegende Verfahren weist den Vorteil auf, dass auf das Einspeisen bzw. Injizieren des Matrixmaterials in Flüssigform in einem separaten Verfahrensschritt durch eine separate Vorrichtung verzichtet werden kann und daher mit einer technisch einfacheren Einrichtung kostengünstiger produziert werden kann.

### Herstellung von Kunststoffartikeln mit permanentem Schaumstoffkern

Ein weiterer Aspekt ist die Herstellung von faserverstärkten Kunststoffartikeln mit einem Schaumstoffkern aus einem Polyester, wie PET, PBT oder PBT-Blend mittels eines Formwerkzeugs. Hierzu werden ein oder mehrere separate Schaumstoffkerne mit Verstärkungsfasern umhüllt und in das Formwerkzeug gelegt.

In einer ersten Ausführungsvariante wird ein reaktives Ausgangsmaterial, insbesondere PBT-Ausgangsmaterial, unter Anwendung des oben beschriebenen Formpressverfahrens in seinen diversen möglichen Ausführungsvarianten, z.B. in Flüssig- oder Pulverform in das geöffnete Formwerkzeug eingespeist.

In einer zweiten Ausführungsvariante wird ein reaktives Ausgangsmaterial, insbesondere PBT-Ausgangsmaterial, in Flüssigform in einem bekannten LCM-Prozess in das Formwerkzeug injiziert.

Die polymerisierende PBT-Kunststoffmatrix geht hierbei eine innige Verbindung sowohl mit den Verstärkungsfasern als auch mit dem, zweckmässig sortengleichen Schaumstoffkern ein.

### Vorbeschichtung des Formwerkzeugs

Ein weiterer Aspekt der Erfindung betrifft die Vorbehandlung der Kavität eines Formwerkzeuges in einem LCM- oder Formpress-Verfahren. Die Kavität wird mit einem reaktiven Ausgangsmaterial beschichtet, wobei dieses im eigentlichen Formgebungsprozess polymerisiert unter Ausbildung der Oberfläche des Kunststoffartikels zu einem Polyester, PET und insbesondere zu einem PBT oder PBT-Blend polymerisiert.

Die Beschichtung kann in Pulverform auf die, vorzugsweise vorgewärmte Kavitätwand des Formwerkzeugs aufgebracht werden, wobei die Pulverbeschichtung in einem Sinterprozess zu einem dünnen Film aufgeschmolzen wird. Die Beschichtung kann auch in flüssiger Form aufgebracht, z.B. aufgesprüht oder aufgepinselt werden. Ferner kann die Beschichtung auch als fester Film aufgebracht werden. Der Film kann unter Erweichen oder Anschmelzen (bsp. durch Erwärmen) an die Kontur der Kavitätwand angelegt werden. Ferner kann der Film auch mittels Druck bzw. Vakuum oder allgemein mittels mechanischen Mitteln auf die Kavitätwand aufgebracht werden.

Es ist auch denkbar, anstelle des reaktiven Ausgangsmaterials, ein (polymerisiertes) Polyester wie PET und insbesondere ein PBT oder PBT-Blend gemäss einer der oben genannten Art und Weise auf die Wand der Werkzeugkavität aufzubringen.

Die Beschichtung in polymerisierter Form besteht vorzugsweise aus derselben oder einer ähnlichen Kunststoffzusammensetzung wie die Kunststoffmatrix des fertigen Formteils. Die Beschichtung kann beispielsweise grösser 10 µm, vorzugsweise grösser 100 µm, insbesondere grösser 500 µm, und kleiner 5 mm, vorzugsweise kleiner 3 mm, insbesondere kleiner 2 mm sein.

Vor dem Aufbringen der genannten Beschichtung kann die Werkzeugform überdies mit einem geeigneten Trennfilm beschichtet werden, welches die Entformung des gehärteten Kunststoffartikels erleichtert.

Ziel der genannten Beschichtung mit einem Kunststoff ist es, einen faserverstärkten Kunststoffartikel mit einer Oberfläche von hoher Güte herzustellen. Die hohe Oberflächengüte rührt unter anderem daher, dass die Beschichtung keine Verstärkungsfasern enthält.

Im folgenden wird die Erfindung beispielhaft und mit Bezug auf die beiliegenden Zeichnungen näher erläutert. Es zeigen:
- Fig. 1:: eine Vorrichtung zur Ausführung eines Deckfolienverfahrens;
- Fig. 2:: eine Vorrichtung zur Herstellung eines Mehrschichtverbundes;
- Fig. 3:: eine Lochplatte einer Schaumstoffextrusions-Vorrichtung;
- Fig. 4:: einen Querschnitt eines Sandwich-Elements.

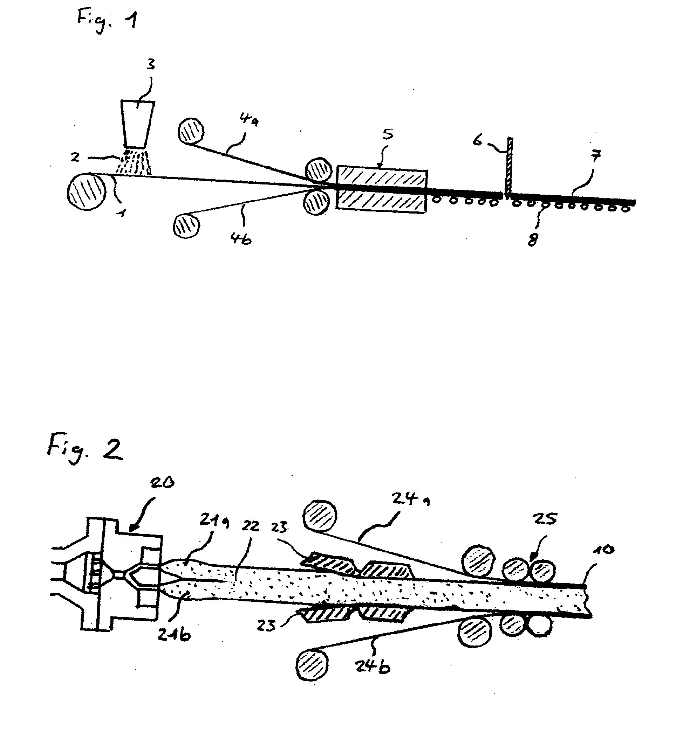

Fig. 1 zeigt eine Vorrichtung zur Herstellung von faserverstärktem Plattenmaterial aus einem Polyester. Ein kontinuierlich zugeführtes bahnförmiges Fasergebilde 1 wird mittels einer Pulverbeschichtungseinrichtung 3 mit einem reaktiven Ausgangsmaterial in Pulverform 2 beschichtet. Das auf das Fasergebilde aufgebrachte Pulver kann zwecks Verbesserung der Hafteigenschaften erwärmt werden. Alternativ dazu kann das Fasergebilde vorgewärmt und mit dem Pulver beschichtet werden. Nachfolgend werden beidseitig kontinuierlich Deckschichten in Form von Polyesterfolien 4a, 4b zugeführt und auf die freien Oberflächen der beschichteten Fasergebilde aufgebracht. In einer Durchlaufpresse 5 wird das reaktive Ausgangsmaterial unter Ausbildung einer Kunststoffmatrix und unter inniger Verbindung mit den Deckschichten polymerisiert. Das verfestigte Plattenmaterial wird nach Verlassen der Durchlaufpresse 5 auf Rollenförderer 8 einer Schneid- oder Sägevorrichtung 6 zugeführt und zu einzelnen Platten 7 abgelängt.

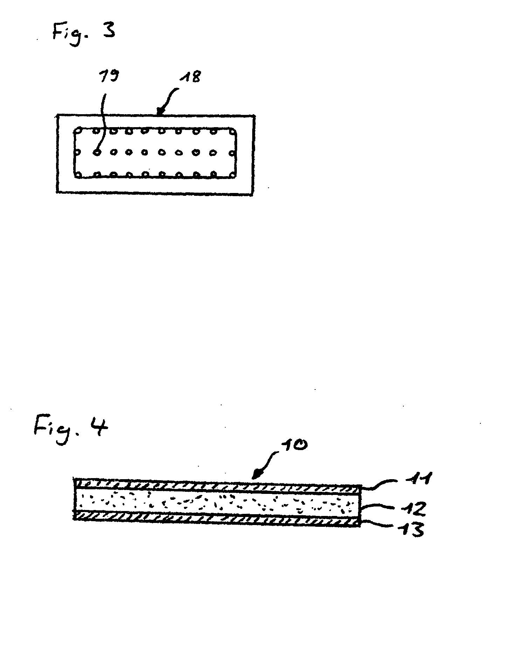

Fig. 2 zeigt die Herstellung eines Sandwichverbundes, wobei durch die Öffnungen 19 einer Lochplatte 18 (Fig. 3) einer Extrusionsvorrichung 1 strangförmiges mit einem Treibmittel versehenes Polyester 21 a, 21 b extrudiert wird. Die extrudierten Stränge 21 a, 21 b expandieren nach Austritt aus der Lochplatte 18 und verkleben gegenseitig zu einem plattenförmigen Schaumstoffkörper 22. Der noch weiche Schaumstoffkörper 22 wird in einer Richtvorrichtung 23 in die gewünschten Dicken- und Breitenmasse gebracht. Nachfolgend werden bahnförmige, mit einem reaktiven Ausgangsmaterial imprägnierte oder beschichtete Fasergebilde 24a, 24b zugeführt und auf die freien Oberflächen des Schaumstofflcörpers 22 aufgebracht. Der Schichtverbund wird anschliessend in einer Press- oder Walzvorrichtung 25 unter Polymerisation des reaktiven Ausgangsmaterials zu einer Kunststoffmatrix und unter inniger Verbindung derselbigen mit der Oberfläche des Schaumstoffkörpers 22 zu einem Sandwichverbund verpresst. Der Sandwichverbund wird anschliessend an einer Schneid- oder Sägeeinrichtung (nicht gezeigt) zu einzelnen Sandwichplatten 10 abgelängt. Die genannte Sandwichplatte 10 (Fig. 4) besteht aus einem Polyester-Schaumstoffkern 12 sowie zwei beidseitig angeordneten Deckschichten 11, 13 aus einem faserverstärktem PBT-Kunststoff.

## Patentansprüche

1. Verfahren zur Herstellung eines Mehrschichtverbundes, enthaltend wenigstens eine Schicht aus einem Schaumstoff und eine mit dieser verbundenen Deckschicht aus einem faserverstärkten Plattenmaterial,
**dadurch gekennzeichnet, dass**
sowohl der Schaumstoff als auch das Plattenmaterial eine Kunststoffmatrix aus einem Polyester enthalten und zur Herstellung des Mehrschichtverbundes eine mit einem reaktiven Ausgangsmaterial, enthaltend zyklische oder makrozyklische Oligomere des Polyesters vermengt mit einem Polymerisationskatalysator, imprägnierte oder beschichtete ein- oder mehrlagige Faserbahn mit einer Schaumstoffschicht aus einem polymerisierten Polyester zu einem Laminat verbunden wird, und das reaktive Ausgangsmaterial unter Ausbildung der Kunststoffmatrix des Plattenmaterials und unter inniger Verbindung mit der Schaumstoffschicht zu einem Polyester polymerisiert wird.

2. Verfahren nach Anspruch 1, wobei mittels eines Extruders ein mit einem Treibmittel beladenes Ausgangsmaterial auf die imprägnierte oder beschichtete Faserbahn extrudiert wird und unter Druckentlastung zu einer Schaumstoffschicht expandiert, welche mit der imprägnierten oder beschichteten Faserbahn zusammengeführt wird und sich mit dieser verbindet.

3. Verfahren nach Anspruch 2, wobei das Ausgangsmaterial durch eine Lochplatte in Form von einzelnen Strängen extrudiert werden, welche bei Austritt zu einem Schaumstoff expandieren und gegenseitig zu einer Schaumstoffschicht verkleben.

4. Verfahren nach einem der Ansprüche 1 bis 3, wobei die Schaumstoffschicht beidseitig mit einem Plattenmaterial beschichtet wird.

5. Verfahren zur Herstellung eines Mehrschichtverbundes, enthaltend wenigstens eine Schicht aus einem Schaumstoff und eine mit dieser verbundenen Deckschicht aus einem faserverstärkten Plattenmaterial,
**dadurch gekennzeichnet, dass**
sowohl der Schaumstoff als auch das Plattenmaterial eine Kunststoffmatrix aus einem Polyester enthalten und zur Herstellung des Mehrschichtverbundes ein mit einem Treibmittel beladenes Ausgangsmaterial auf das Plattenmaterial extrudiert wird, welches unter Druckentlastung zu einer Schaumstoffschicht expandiert und mit dem Plattenmaterial zu einem Mehrschichtverbund zusammengeführt wird.

6. Verfahren nach Anspruch 5, wobei das Ausgangsmaterial durch eine Lochplatte in Form von einzelnen Strängen extrudiert wird, welche bei Austritt zu einem Schaumstoff expandieren und gegenseitig zu einer Schaumstoffschicht verkleben.

7. Verfahren nach Anspruch 5 oder 6, wobei die Schaumstoffschicht beidseitig mit einem Plattenmaterial beschichtet wird.
